# FASCICULE DE BREVET EUROPEEN

(11) **EP 1 412 224 B1**
(45) Date de publication et mention de la délivrance du brevet: **21.11.2007**
(21) Numéro de dépôt: 02772471.5
(22) Date de dépôt: 30.07.2002
(51) Int. Cl.: B60Q 1/52

(54) **DISPOSITIF D'ALARME PAR VIBRATION POUR INFORMATION D'UN CONDUCTEUR DE VEHICULE AUTOMOBILE**
WARNUNGSEINRICHTUNG MIT VIBRATION FÜR KRAFTFAHRZEUGFAHRER
VIBRATION ALARM DEVICE FOR WARNING A VEHICLE DRIVER

(30) Priorité: 01.08.2001 FR 0110339
(43) Date de publication de la demande: 28.04.2004
(73) Titulaire: Peugeot Citroen Automobiles SA, 92200 Neuilly sur Seine (FR)
(72) Inventeur: LEFRANC, Francis, F-92150 Suresnes (FR)
(74) Mandataire: Thinat, Michel
(86) Numéro de dépôt international: PCT/FR2002/002749
(87) Numéro de publication internationale: WO 2003/011638

(56) Documents cités:
- EP-B- 0 348 691
- PATENT ABSTRACTS OF JAPAN vol. 2000, no. 11, 3 janvier 2001 (2001-01-03) & JP 2000 221051 A (MAZDA MOTOR CORP), 11 août 2000 (2000-08-11)
- PATENT ABSTRACTS OF JAPAN vol. 2000, no. 11, 3 janvier 2001 (2001-01-03) & JP 2000 225877 A (MAZDA MOTOR CORP), 15 août 2000 (2000-08-15)
- PATENT ABSTRACTS OF JAPAN vol. 2000, no. 24, 11 mai 2001 (2001-05-11) & JP 2001 199296 A (MATSUSHITA ELECTRIC IND CO LTD), 24 juillet 2001 (2001-07-24)
- PATENT ABSTRACTS OF JAPAN vol. 2000, no. 04, 31 août 2000 (2000-08-31) & JP 2000 020900 A (HITACHI LTD), 21 janvier 2000 (2000-01-21)

## Description

La présente invention est relative à un dispositif propre à transmettre au seul conducteur d'un véhicule automobile une information l'avertissant d'un événement extérieur en relation avec la conduite de ce véhicule, sans perturber dans l'habitacle de celui-ci le confort des autres occupants ou l'ambiance dans laquelle ils sont placés.

Les véhicules automobiles actuels comportent, selon des réalisations pratiques de plus en plus sophistiquées, des moyens divers qui avertissent le conducteur d'évènements qui sont liés ou en rapport avec la conduite de ce véhicule, par exemple mais à titre non limitatif, du dépassement d'un seuil de vitesse autorisé, d'un surrégime pour le nombre de tours du moteur dans un rapport donné de la boîte de vitesses, de la détection de la présence d'un autre véhicule dans l'angle mort de vision du conducteur au moment d'un déboîtement de son véhicule pour dépassement d'une autre voiture roulant devant ce dernier ou franchissement d'un obstacle quelconque, d'un dépassement d'une ligne continue de marquage au sol du milieu de la chaussée dans certaines configurations du terrain, d'une limitation de la visibilité exigeant l'allumage des feux de signalisation du véhicule, d'un appel sur un téléphone portable de voiture dit à mains libres etc..., voire de toute autre cause extérieure dont l'apparition soudaine ou progressive exige une réaction appropriée du conducteur.

En règle générale, ces moyens avertisseurs sont actionnés par un capteur porté par le véhicule, qui détecte l'événement lorsqu'il se produit, émettant un signal qui actionne une alarme qui peut être sonore ou visuelle, et qui se manifeste au tableau de bord ou en tout autre endroit de l'habitacle du véhicule pour avertir le conducteur de cet événement, mais risque aussi de perturber les passagers et de nuire à leur confort.

De plus, on peut imaginer que dans le cas d'une alarme visuelle, celle-ci ne soit pas nécessairement aperçue par le conducteur qui regarde la route en avant de son véhicule et n'a pas en permanence ses yeux dirigés vers le tableau de bord, de sorte que dans certains cas, il peut être averti trop tard de l'événement et n'ait pas le temps matériel d'une réaction adéquate dans son mode de conduite.

La présente invention a pour objet un dispositif dans lequel les moyens avertisseurs précités se manifestent de façon différente, non plus par mise en oeuvre d'une alarme visuelle ou sonore, mais par une information ressentie de manière physique, directe et matérielle par le conducteur lui-même dans un endroit en contact avec une zone déterminée de son corps, de sorte que cette alarme soit perçue uniquement par lui et non par les autres passagers du véhicule qui ne risquent pas d'être perturbés par l'événement à la source de l'alarme créée.

Plus spécialement encore, l'invention consiste en un dispositif propre à avertir d'un événement extérieur par une vibration mécanique qui, reçue par le seul conducteur du véhicule, prévient celui-ci de la nature et le cas échéant de l'amplitude de cet événement, lui permet de l'appréhender immédiatement et de réagir sans attendre pour faire disparaître les causes de l'alarme créée en apportant à la conduite du véhicule les correctifs nécessaires pour en supprimer les conséquences.

Diverses réalisations ont déjà été envisagées dans la technique pour créer un signal d'alarme en réponse à un événement extérieur à un véhicule automobile, qui se manifeste par une vibration mécanique en vue d'avertir le conducteur.

A titre indicatif, on peut citer les dispositions décrites dans les documents antérieurs publiés EP 0 348 691 et EP 0 856 432, qui envisagent la création d'une alarme ou plus généralement d'un signal avertisseur sous la forme de vibrations réparties dans tout le siège ou le volant du véhicule, de sorte que les moyens ainsi mis en oeuvre ne permettent pas de discriminer de façon sûre la localisation de l'événement générateur du signal ayant provoqué cette alarme.

Ces systèmes ne sont pas parfaitement fiables et sont généralement peu sensibles pour le conducteur qui n'identifie pas immédiatement la cause de la vibration créée et ne lui permet pas de réagir dans des délais aussi réduits qu'il est parfois indispensable. En outre, ils sont d'une relativement grande complexité dans leur réalisation et présentent un coût assez élevé.

On connaît, par le document JP2001-199296 ou le document JP2000-225877, un dispositif d'alarme par vibration conforme au préambule de la revendication 1. Les documents JP2001-199296 et JP2000-225877 permettent ainsi d'avertir de l'éloignement d'un obstacle extérieur détecté et de sa direction.

On connaît également, par le document JP2000-221051, un dispositif permettant d'assister les malentendants en guidant, par indication de l'éloignement et de la direction, le chemin déterminé par un système de géolocalisation.

Cependant, ces systèmes connus sont difficiles à implanter dans les sièges du conducteur nécessitant de développer des sièges spéciaux.

Les documents DE-19640331 et DE-19810755 divulguent des moteurs électriques associés à des balourds aptes à générer des vibrations. Cependant, ils ne sont pas prévus pour s'adapter à l'intérieur d'un siège de véhicule mais à l'extérieur pour masser l'utilisateur du siège.

La présente invention a pour but de pallier aux inconvénients précités.

Pour atteindre ce but, le dispositif d'alarme de l'invention comprend les caractéristiques énoncées dans la partie caractérisante de la revendication 1.

Dans un mode de réalisation préféré de l'invention, l'axe de rotation du moteur électrique comporte une extension qui est solidarisée avec une masselotte décentrée, créant un balourd, ce moteur étant actionné par une tension continue ou alternative en fonction d'un signal fourni par au moins un capteur de détection de l'événement.

Selon le cas, la tension d'actionnement du moteur électrique présente un niveau ou une fréquence variable, de manière à modifier la fréquence de vibration de la masselotte décentrée en fonction de l'évolution du signal fourni par le capteur.

De préférence, lorsque le siège du conducteur du véhicule comporte une armature métallique de support de la matelassure et du revêtement extérieur de ce siège, cette armature comprenant un dossier et une assise grillagés, formés de fils métalliques entrecroisés, le moteur électrique créant la vibration est fixé sur au moins un de ces fils dans une région déterminée du siège, en contact avec la zone du corps du conducteur où la vibration doit être ressentie.

Avantageusement, le capteur fournissant le signal de commande du moteur est adapté à différencier l'événement qui le produit par rapport à la direction de déplacement du véhicule. Dans ce cas, le dossier et/ou l'assise grillagés de l'armature du siège comportent deux moteurs électriques montés en deux endroits opposés, respectivement en partie droite et en partie gauche de ce siège, de manière à permettre de distinguer la vibration créée en fonction de la localisation de l'événement.

Selon le cas, les deux moteurs électriques sont disposés dans des positions symétriques de part et d'autre du plan médian du siège dans l'assise de celui-ci, de manière à créer une vibration sous l'une et ou l'autre des deux fesses, droite ou gauche, du conducteur. En variante, les deux moteurs sont montés dans le dossier du siège, la vibration créée étant localisée en contact de l'une ou l'autre des omoplates du conducteur ou d'une autre partie de son dos.

Dans tous les cas, les moteurs électriques sont fixés sur des fils de l'armature du siège dans des endroits où la matelassure de celui-ci présente une épaisseur plus réduite, de manière à ne pas amortir les vibrations créées, en permettant qu'elles soient en permanence perçues par le conducteur.

Dans un mode de réalisation particulier de l'invention, chaque moteur est fixé sur un fil de l'armature au moyen d'une bride d'appui immobilisée par des vis transversales serrant le fil entre cette bride et le boîtier du moteur. Avantageusement, le fil métallique de l'armature est maintenu entre la bride d'appui et une cale souple, appliquée contre le boîtier.

La masselotte qui forme le balourd sur l'extension de l'axe du moteur est solidarisée avec celle-ci par un moyen de fixation approprié réglable ou est de préférence moulée ou usinée avec cette extension en une position déterminée de manière à éviter tout contact avec l'armature du siège.

Chaque moteur est réuni à un boîtier de commande distinct ou commun à l'ensemble des moteurs, recevant le signal issu du ou des capteurs pour agir sur ces moteurs et créer la vibration correspondante.

D'autres caractéristiques d'un dispositif d'alarme par vibration établi conformément à l'invention apparaîtront encore à travers la description qui suit d'un exemple de réalisation, donné à titre indicatif et non limitatif, en référence au dessin annexé sur lequel :
- La Figure 1 est une vue en perspective de l'armature du siège du conducteur d'un véhicule automobile, représenté dépourvu de sa matelassure et illustrant le montage dans son assise de moteurs électriques propres à créer une vibration localisée dans celle-ci.
- La Figure 2 est une vue en élévation, à plus grande échelle, d'un moteur électrique mis en oeuvre dans l'armature de siège de la Figure 1.

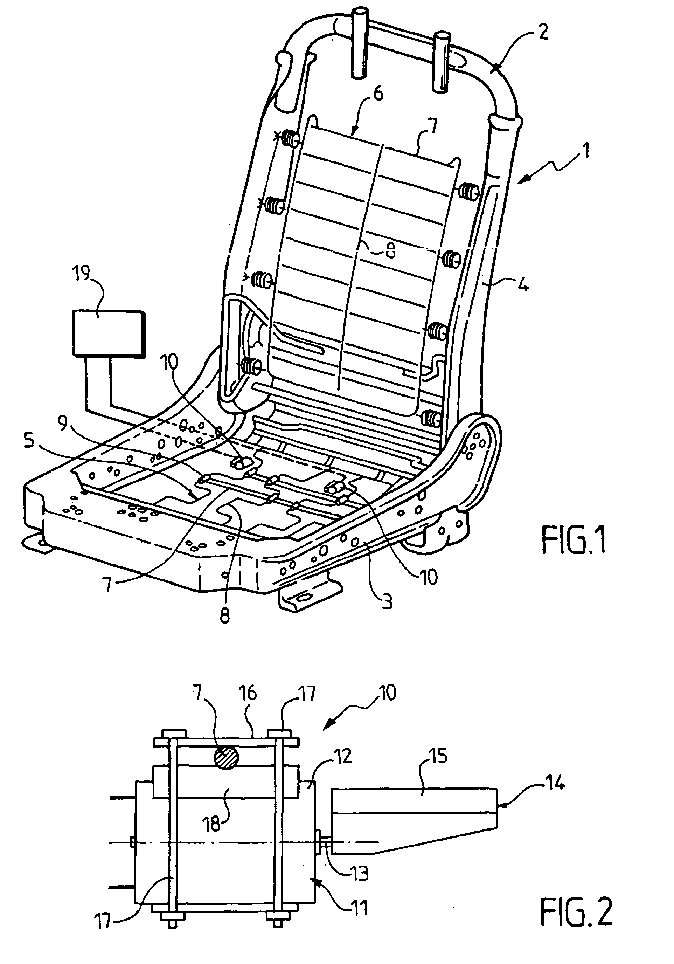

Sur la Figure 1, la référence 1 désigne dans son ensemble l'armature d'un siège de véhicule automobile et notamment de celui réservé, dans l'habitacle de ce véhicule (non représenté), au conducteur.

L'armature 1 est ici constituée, encore que son mode de réalisation particulier n'importe pas directement à l'invention, d'une carcasse 2 en acier délimitant respectivement l'assise 3 et le dossier 4 de ce siège, lequel comporte par ailleurs une matelassure et un revêtement extérieur qui sont enlevés sur le schéma de manière à permettre de voir la mise en oeuvre des dispositions conformes à l'invention.

Dans le mode de réalisation représenté, la carcasse 2 de l'armature 1 du siège comporte, respectivement dans l'assise 3 et le dossier 4, des structures à base de fils métalliques, s'étendant de préférence selon des directions perpendiculaires, ces fils pouvant être sensiblement droits comme illustré pour le dossier ou présenter pour partie des ondulations comme figuré pour l'assise, les fils étant associés dans leurs points de croisement par des clips 9 ou autres organes de liaison équivalents (apparaissant seulement avec les fils 7 et 8 de l'assise 3), assurant la cohérence du grillage ainsi formé.

Conformément à l'invention, l'assise 3 seule, le dossier 4 ou le cas échéant l'un et l'autre, comportent en des endroits déterminés par construction et judicieusement, choisis, des moyens propres à créer une vibration mécanique susceptible d'être ressentie et localisée par le conducteur, soit sous son séant, soit dans son dos, selon l'endroit où ces moyens vibrants sont placés.

Dans l'exemple illustré, le siège comporte ainsi deux moyens de ce genre désignés sous la référence 10 et disposés dans l'assise 3 du siège, ces moyens étant disposés de préférence de façon symétrique de part et d'autre du plan médian du siège pour se placer sensiblement sous chacune des fesses du conducteur, sous la matelassure qui recouvre l'armature 1, laquelle est par ailleurs convenablement allégée en ces endroits de la mousse ou du matériau qui la constitue pour permettre de ne pas amortir la vibration créée et faire en sorte que celle-ci soit au contraire perçue de manière nette et sensible par le conducteur.

De préférence et comme illustré plus particulièrement à plus grande échelle sur la Figure 2, chacun des moyens vibrants 10 est constitué par un petit moteur électrique 11 comprenant un boîtier 12 et un axe de rotation qui se prolonge par une extension 13, solidarisée avec une masselotte 14. Cette masselotte est constituée d'un élément pesant 15 fixé de manière décentrée sur l'extension 13 de manière à créer un balourd et, lorsque le moteur électrique 11 est entraîné en rotation, provoquer l'apparition d'une vibration mécanique dont l'amplitude est fonction de la vitesse d'entraînement de l'axe de ce moteur.

Comme on le voit également sur la Figure 2, chaque moteur électrique 11 constituant l'un des moyens vibrants 10 fixé sur l'assise 3 du siège, est avantageusement immobilisé vis-à-vis d'un des fils du grillage de cette assise, par exemple un des fils 7 de celle-ci (qui n'apparaît pas sur la Figure 1 pour ne pas surcharger celle-ci où sont seulement représentés les deux moyens 10).

Cette immobilisation du moteur 11 sur le fil 7 est de préférence réalisée à l'aide d'une bride 16 maintenue par des vis 17 en emprisonnant le fil entre cette bride et une cale souple 18, elle-même en appui sur le boîtier 12 du moteur 11. Bien entendu, tout autre moyen de fixation équivalent pourrait être envisagé.

Dans tous les cas, la masselotte 14 créant la vibration souhaitée, venue de moulage avec l'extension 13 de l'axe du moteur, ou étant usinée et ensuite solidarisée avec celle-ci, est agencée de sorte que, lors de la rotation du moteur, elle ne puisse pas entrer en contact avec un élément quelconque de l'armature 1 du siège qui interdirait sa rotation.

Le moteur électrique est alimenté par une tension continue ou alternative à fréquence variable provenant d'un boîtier de commande 19, logé en un endroit quelconque du véhicule, ce boîtier fournissant aux moyens vibrants 10 un signal approprié dont la source provient d'au moins un capteur apte à détecter et à être déclenché par un événement extérieur (aussi bien qu'intérieur) à l'habitacle et auquel il importe que le conducteur réagisse rapidement et de manière adéquate.

Avantageusement, le boîtier de commande 19, dont le détail de la réalisation est indifférent à l'invention, est conçu de telle sorte que la vibration qu'il provoque en actionnant les moyens vibrants 10, puisse varier en fonction de l'importance du signal reçu du capteur associé et permettre ainsi au conducteur de proportionner sa réaction.

Par ailleurs, l'utilisation de plusieurs moyens vibrants distincts et localisés permet à ce conducteur de déterminer, non seulement l'origine, mais également l'endroit d'où provient l'événement détecté par le capteur, du moins par rapport à la direction de déplacement du véhicule, à droite ou à gauche, le boîtier de commande 19 actionnant, à l'image de cet événement, le moyen vibrant qui est lui-même situé à droite ou à gauche du siège, sous la fesse correspondante du conducteur.

On réalise ainsi un dispositif d'alarme du conducteur, par création d'une sensation de vibration purement mécanique, qui à l'inverse d'une alarme sonore ou visuelle, ne risque pas de perturber les passagers du véhicule et nuire à leur confort.

Contrairement à une telle alarme classique qui peut, plus spécialement lorsqu'elle est visuelle, ne pas être immédiatement perçue par le conducteur lorsqu'elle est disposée sur le tableau de bord qu'il ne consulte pas de façon permanente lorsqu'il est absorbé par sa conduite, l'usage de moyens vibrants s'avère plus sûr et par suite plus efficace. Une telle alarme est par ailleurs d'un coût réduit et peut s'adapter aisément sur un siège de véhicule, sans aucune modification de la structure de celui-ci.

Bien entendu, il va de soi que l'invention ne se limite pas à l'exemple de réalisation plus spécialement décrit ci-dessus en référence aux dessins annexés ; elle en embrasse au contraire toutes les variantes.

Notamment, il est clair que le dispositif envisagé est en lui-même indépendant de la nature propre de l'événement détecté par le capteur et du signal transmis par celui-ci au boîtier de commande des moyens vibrants. Toutes les éventualités évoquées dans le préambule de la présente description trouvent donc une utilisation appropriée avec le dispositif de la présente invention.

Enfin, toute la description ci-dessus a été faite en mentionnant un capteur fournissant un signal en réponse à un événement extérieur. Toutefois, on ne sortirait pas du cadre de l'invention si ce signal était fourni par un dispositif de commande programmé pour provoquer des vibrations dans certaines circonstances ou à des moments déterminés.

## Revendications

1. - Dispositif d'alarme par vibration pour information d'un conducteur de véhicule automobile, comportant au moins un moyen (10) logé dans le siège du conducteur et propre à créer une vibration sous l'effet d'un signal de commande provenant d'un capteur en réponse à l'apparition d'un événement extérieur donné, exigeant une réaction de ce conducteur, cette vibration étant créée en au moins un endroit défini du siège réservé à ce conducteur lui permettant de ressentir cette vibration dans une zone précise de son corps et d'identifier l'origine comme la localisation de l'événement, **caractérisé en ce que** le siège du conducteur du véhicule comporte une armature métallique (1) de support de la matelassure et du revêtement extérieur de ce siège, cette armature comprenant un dossier (4) et une assise (3) grillagés, formés de fils métalliques (7,8) entrecroisés, et **en ce que** le moyen (10) comprend un moteur électrique (11) apte à créer la vibration et qui est fixé sur au moins un des fils métalliques (7,8) dans une région déterminée du siège, en contact avec la zone du corps du conducteur où la vibration doit être ressentie.

2. - Dispositif selon la revendication 1, **caractérisé en ce que** l'axe de rotation du moteur électrique (11) comporte une extension (13) qui est solidarisée avec une masselotte décentrée (14), créant un balourd, ce moteur étant actionné par une tension continue ou alternative en fonction d'un signal fourni par au moins un capteur de détection de l'événement.

3. - Dispositif selon la revendication 2, **caractérisé en ce que** la tension d'actionnement du moteur électrique (11) présente un niveau ou une fréquence variable, de manière à modifier la fréquence de vibration de la masselotte décentrée (14) en fonction de l'évolution du signal fourni par le capteur.

4. - Dispositif selon l'une quelconque des revendications 1 à 3, **caractérisé en ce que** le dossier (4) et/ou l'assise (3) grillagés de l'armature (1) du siège comportent deux moteurs électriques (11) montés en deux endroits opposés, respectivement en partie droite et en partie gauche de ce siège, de manière à permettre de distinguer la vibration créée en fonction de la localisation de l'événement.

5. - Dispositif selon la revendication 4, **caractérisé en ce que** les deux moteurs électriques (11) sont disposés dans des positions symétriques de part et d'autre du plan médian du siège dans l'assise (3) de celui-ci.

6. - Dispositif selon la revendication 4, **caractérisé en ce que** les deux moteurs électriques (11) sont montés dans le dossier (4) du siège, la vibration créée étant localisée en contact de l'une ou l'autre des omoplates du conducteur ou d'une autre partie de son dos.

7. - Dispositif selon l'une quelconque des revendications 1 à 6, **caractérisé en ce que** chaque moteur électrique (11) est fixé sur des fils de l'armature du siège dans des endroits où la matelassure de celui-ci présente une épaisseur plus réduite.

8. - Dispositif selon l'une quelconque des revendications 1 à 7, **caractérisé en ce que** chaque moteur électrique (11) est fixé sur un fil (7) de l'armature (1) au moyen d'une bride d'appui (16) immobilisée par des vis transversales (17) serrant le fil entre cette bride et le boîtier (12) du moteur.

9. - Dispositif selon la revendication 8, **caractérisé en ce que** le fil métallique (7) de l'armature (1) est maintenu entre la bride d'appui (16) et une cale souple (18), appliquée contre le boîtier (12).

10. - Dispositif selon l'une quelconque des revendications 2 à 9, **caractérisé en ce que** la masselotte décentrée (14) est solidarisée avec l'extension (13) de l'axe du moteur (11) par un moyen de fixation ou est moulée ou usinée avec cette extension.

11. - Dispositif selon l'une quelconque des revendications 1 à 10, **caractérisé en ce que** chaque moteur électrique (11) est réuni à un boîtier de commande (19) distinct ou commun à l'ensemble des moteurs, recevant le signal issu du ou des capteurs. '

## Claims

1. Vibration alarm device for warning a vehicle driver, comprising at least one means (10) housed in the driver's seat and intended to generate a vibration under the effect of a control signal from a sensor in response to a specific external event, requiring a reaction from said driver, this vibration being generated in at least one specific point of the driver's seat, enabling him to feel said vibration in a specific area of his body and to identify the origin as well as the location of the event, **characterized in that** the vehicle driver's seat comprises a metal framework (1) to support the padding and outer covering of said seat, said framework comprising a back (4) and a seat bottom (3) having screens, made up of intertwined metal wires (7, 8), and **in that** the means (10) comprises an electric motor (11) able to generate the vibration and which is fixed on at least one of the metal wires (7, 8) in a specific region of the seat, in contact with the zone of the driver's body where the vibration must be felt.

2. Device according to claim 1, **characterized in that** the axis of rotation of the electric motor (11) comprises an extension (13) made integral with an eccentric weight (14), creating an unbalance, this motor being actuated by direct or alternating voltage according to a signal provided by at least one event detection sensor.

3. Device according to claim 2, **characterized in that** the voltage for actuating the electric motor (11) has one level or a variable frequency, so as to modify the vibration frequency of the eccentric weight (14) according to the evolution of the signal provided by the sensor.

4. Device according to any of claims 1 to 3, **characterized in that** the screened back (4) and/or seat bottom (3) of the framework (1) of the seat comprise two electric motors (11) mounted in two opposite positions, on the right and left parts of said seat, respectively, such that it is possible to recognize the vibration created according to the location of the event.

5. Device according to claim 4, **characterized in that** the two electric motors (11) are arranged in symmetrical positions on either side of the median plane of the seat in the seat bottom (3) of said seat.

6. Device according to claim 4, **characterized in that** the two electric motors (11) are mounted in the back (4) of the seat, the vibration generated being located in contact with one or the other of the driver's shoulder blades or another part of the driver's back.

7. Device according to any of claims 1 to 6, **characterized in that** each electric motor (11) is fixed on wires of the framework of the seat in positions where the seat padding has a smaller thickness.

8. Device according to any of claims 1 to 7, **characterized in that** each electric motor (11) is fixed on a wire (7) of the framework (1) through a support flange (16) immobilized by transverse screws (17) gripping the wire between this flange and the housing (12) of the motor.

9. Device according to claim 8, **characterized in that** the metal wire (7) of the framework (1) is maintained between the support flange (16) and a flexible shim (18), applied against the housing (12).

10. Device according to any of claims 2 to 9, **characterized in that** the eccentric weight (14) is made integral with the extension (13) of the axis of the motor (11) through fixing means or is molded or machined with this extension.

11. Device according to any of claims 1 to 10, **characterized in that** each electric motor (11) is attached to a control housing (19), separate or shared by all of the motors, receiving the signal from the sensor(s).

## Patentansprüche

1. Vibrations-Warnvorrichtung zur Information eines Kraftfahrzeugfahrers, mindestens ein Mittel (10) umfassend, das im Sitz des Kraftfahrers untergebracht und in der Lage ist, unter der Wirkung eines Steuersignals, das von einem Sensor in Beantwortung eines bestimmten äußeren Ereignisses ausgesendet wurde und eine Reaktion dieses Kraftfahrers erfordert, eine Vibration zu erzeugen, wobei diese Vibration an mindestens einer bestimmten Stelle des Sitzes, der diesem Kraftfahrer vorbehalten ist, erzeugt wird, ihm gestattend, diese Vibration in einem bestimmten Bereich seines Körpers zu spüren und die Ursache sowie die Lokalisierung des Ereignisses zu identifizieren, **dadurch gekennzeichnet, dass** der Sitz des Kraftfahrers eine metallische Armierung (1) umfasst, die die Polsterung und den äußeren Bezug dieses Sitzes stützt, wobei diese Armierung eine Rückenlehne (4) und eine Sitzfläche (3) mit Gitterstruktur umfasst, die von verflochtenen Metalldrähten (7, 8) gebildet wird, und **dadurch**, dass das Mittel (10) einen Elektromotor (11) umfasst, der in der Lage ist, die Vibration zu erzeugen und der auf mindestens einem Metalldraht (7, 8) in einem bestimmten Bereich des Sitzes im Kontakt mit dem Bereich des Körpers des Kraftfahrers befestigt ist, wo die Vibration empfunden werden muss.

2. Vorrichtung nach Anspruch 1, **dadurch gekennzeichnet, dass** die Rotationsachse des Elektromotors (11) eine Erweiterung (13) umfasst, die mit einem exzentrischen Gewicht (14) verbunden ist, das eine Unwucht erzeugt, wobei dieser Motor in Abhängigkeit eines von mindestens einem Sensor zur Feststellung des Ereignisses bereitgestellten Signals von einer Gleich- oder Wechselspannung angetrieben wird.

3. Vorrichtung nach Anspruch 2, **dadurch gekennzeichnet, dass** die Spannung zum Antreiben des Elektromotors (11) ein Niveau oder eine variable Frequenz aufweist, so dass die Vibrationsfrequenz des exzentrischen Gewichts (14) in Abhängigkeit der Fortentwicklung des vom dem Sensor bereitgestellten Signals verändert wird.

4. Vorrichtung nach einem der Ansprüche 1 bis 3, **dadurch gekennzeichnet, dass** die Rückenlehne (4) und/oder die Sitzfläche (3) mit Gitterstruktur der Armierung (1) des Sitzes zwei Elektromotoren (11) umfassen, die an zwei gegenüberliegenden Stellen montiert sind, jeweils im rechten und im linken Bereich dieses Sitzes, um die Vibration, die in Abhängigkeit von der Lokalisierung des Ereignisses erzeugt wurde, unterscheiden zu können.

5. Vorrichtung nach Anspruch 4, **dadurch gekennzeichnet, dass** die zwei Elektromotoren (11) symmetrisch positioniert auf der einen und der anderen Seite der Mittelebene des Sitzes in der Sitzfläche (3) desselben angeordnet sind.

6. Vorrichtung nach Anspruch 4, **dadurch gekennzeichnet, dass** die zwei Elektromotoren (11) in der Rückenlehne (4) des Sitzes montiert sind, wobei die erzeugte Vibration im Kontakt mit dem einen oder anderen Schulterblatt des Kraftfahrers oder einem anderen Bereich seines Rückens lokalisiert wird.

7. Vorrichtung nach einem der Ansprüche 1 bis 6, **dadurch gekennzeichnet, dass** jeder Elektromotor (11) auf den Drähten der Armierung des Sitzes an Stellen befestigt ist, wo die Polsterung desselben eine geringere Dicke aufweist.

8. Vorrichtung nach einem der Ansprüche 1 bis 7, **dadurch gekennzeichnet, dass** jeder Elektromotor (11) auf einem Draht (7) der Armierung (1) mit einem Stützflansch (16) befestigt ist, der von hindurchlaufenden Schrauben (17) blockiert wird, wobei der Draht zwischen diesem Flansch und dem Gehäuse (12) des Motors festgeklemmt wird.

9. Vorrichtung nach Anspruch 8, **dadurch gekennzeichnet, dass** der Metalldraht (7) der Armierung (1) zwischen dem Stützflansch (16) und einem elastischen Keil (18) gehalten wird, der am Gehäuse (12) anliegt.

10. Vorrichtung nach einem der Ansprüche 2 bis 9, **dadurch gekennzeichnet, dass** das exzentrische Gewicht (14) mit der Erweiterung (13) der Achse des Motors (11) durch ein Befestigungsmittel verbunden oder geformt oder mit dieser Erweiterung bearbeitet ist.

11. Vorrichtung nach einem der Ansprüche 1 bis 10, **dadurch gekennzeichnet, dass** jeder Elektromotor (11) mit einem Schaltkasten (19) verbunden ist, der für alle Motoren verschieden oder ihnen gemeinsam ist, das Signal, das von dem Sensor oder den Sensoren ausgesendet wird, empfangend.
